# DEMANDE DE BREVET EUROPEEN

(11) **EP 4 668 698 A1**
(43) Date de publication de la demande: **24.12.2025**
(21) Numéro de dépôt: 25183896.7
(22) Date de dépôt: 19.06.2025
(51) Int. Cl.: H04L 45/036, H04L 45/037, H04L 45/0377, H04L 45/64

(54) **PROCÉDÉ ET MODULE DE MODIFICATION DYNAMIQUE DE ROUTAGE**

(30) Priorité: 20.06.2024 FR 2406615
(71) Demandeur: Orange, 92130 Issy-les-Moulineaux (FR)
(72) Inventeur: VALEYRE, Laurent, 92326 CHATILLON CEDEX (FR); FIEAU, Frédéric, 92326 CHATILLON CEDEX (FR); FROMENTOUX, Gaël, 92326 CHATILLON CEDEX (FR)
(74) Mandataire: Plasseraud IP

(57) **Abrégé**

Il est proposé un procédé de modification de routage dans un système de services d'un réseau de communication, le procédé comprenant, lors d'une communication directe entre un premier service et un deuxième service :
une mise en place conditionnelle d'une communication indirecte entre lesdits services passant par un service intermédiaire.

Il est également proposé un module correspondant.

## Description

### Domaine technique

La présente divulgation relève du domaine des télécommunications. Elle concerne plus précisément un procédé de modification dynamique de routage dans un système de services d'un réseau de communication, un module, un dispositif, un programme informatique et un support d'enregistrement correspondants.

### Technique antérieure

L'état de l'art comprend des systèmes qui utilisent des technologies de conteneurisation, comme Docker, et d'orchestration de conteneurs, comme Kubernetes.

Ces systèmes sont conçus pour déployer des applications et des services sur des agglomérations de traitement de données, ou « clusters », en les répartissant sur plusieurs environnements de travail, ou « clouds ».

Dans ce contexte, il existe un besoin continu pour permettre d'insérer facilement, à chaud, des fonctions supplémentaires affectant un trafic courant dans des systèmes de services.

### Résumé

La présente divulgation vient améliorer la situation.

Il est proposé un procédé de modification de routage dans un système de services d'un réseau de communication selon la revendication 1, et un module de modification de routage dans un système de services d'un réseau de communication selon la revendication 13. Les revendications dépendantes présentent des modes de réalisation préférés de l'invention.

Le procédé peut être un procédé de modification dynamique de routage dans un système de services d'un réseau de communication, le procédé comprenant, lors d'une communication directe, active, entre un premier service et un deuxième service :
une mise en place conditionnelle d'une communication indirecte entre lesdits services passant par un service intermédiaire.

Le procédé permet d'insérer, potentiellement à la volée, des fonctions intermédiaires sans interruption de service afin qu'un flux routé par le système bénéficie de ces fonctions intermédiaires. Cette flexibilité permet de maintenir une communication continue entre les services tout en ajoutant des fonctionnalités supplémentaires, ce qui facilite une réponse rapide à divers besoins, par exemple de sécurité ou de performance. Le procédé peut améliorer notamment la résilience et/ou la sécurité du réseau de communication. En effet, l'insertion conditionnelle de services intermédiaires permet de rediriger tout ou partie d'un trafic à travers des services de sécurité, tels que des firewalls ou des systèmes de détection d'intrusion, augmentant ainsi la protection contre les cyberattaques.

Le module peut être un module de modification dynamique de routage dans un système de services d'un réseau de communication, le module étant configuré pour, lors d'une communication directe, active, entre un premier service et un deuxième service :
une mise en place conditionnelle d'une communication indirecte entre lesdits services passant par un service intermédiaire.

Selon un autre aspect, il est proposé un programme informatique comportant des instructions pour la mise en œuvre de tout ou partie d'un procédé tel que défini dans les présentes, dans l'un quelconque de ses modes de réalisation, lorsque ce programme est exécuté par un processeur. Selon un autre aspect, il est proposé un support d'enregistrement non transitoire, lisible par un ordinateur, sur lequel est enregistré un tel programme.

Les caractéristiques exposées dans les paragraphes suivants peuvent, optionnellement, être mises en œuvre, indépendamment les unes des autres ou en combinaison les unes avec les autres :

Dans un exemple, ladite mise en place conditionnelle tient compte d'une politique de gestion du système de services.

Cela peut aider à une gestion intelligente et adaptable du trafic au sein du réseau de communication. Par exemple, dans un scénario où le réseau doit prioriser le trafic de données critiques, la politique de gestion peut automatiquement rediriger ce trafic à travers un service de vérification pour assurer son intégrité et sa rapidité.

Dans un exemple, ladite mise en place conditionnelle tient compte d'une surveillance d'un trafic au sein du réseau de communication.

Cela offre au système de services une capacité de réaction en temps réel à des anomalies ou attaques détectées. Par exemple, lorsqu'une anomalie de trafic est détectée indiquant une potentielle attaque DDoS, le trafic suspect peut être automatiquement redirigé vers un service d'analyse pour neutraliser la menace.

Dans un exemple, le service intermédiaire agit en tant que service de réparation au moins partiel d'un trafic issu du premier service.

Cela contribue à augmenter la qualité et la fiabilité des communications, en particulier des communications critiques en permettant la réparation de flux de données en temps réel. En cas de détection de paquets corrompus dans une transmission, le service intermédiaire peut ainsi corriger ces paquets avant de les transmettre au destinataire final sans interrompre la transmission, améliorant ainsi l'expérience utilisateur.

Dans un exemple, le service intermédiaire est sélectionné parmi une pluralité de services lors de ladite mise en place conditionnelle.

Le choix d'un service le plus approprié parmi plusieurs options disponibles représente un avantage en matière de flexibilité. Par exemple, pour un service de streaming, différents services de cache peuvent être utilisés en fonction de la localisation géographique des utilisateurs pour optimiser la latence et la vitesse de chargement.

Dans un exemple, le service intermédiaire est sélectionné en fonction d'au moins un critère de sélection parmi :
un niveau de sécurité requis,
un niveau de performance requis,
un type de trafic utilisant la communication indirecte,
une exigence réglementaire ;
une combinaison d'au moins deux des critères ci-dessus.

Au moins un (par exemple chaque) critère de sélection peut être aligné avec un besoin opérationnel spécifique et peut par exemple tenir compte de la politique de gestion précitée et/ou de la surveillance précitée, permettant ainsi une flexibilité et une réactivité accrues.

Dans un exemple, le procédé (ou le module) ci-avant est mis en œuvre par un module WASM (WebAssembly).

Le format WebAssembly assure de manière inhérente des performances élevées et une compatibilité multiplateforme, facilitant le déploiement et l'exécution de la fonction intermédiaire indépendamment du support matériel et logiciel utilisé au niveau des serveurs comme des terminaux concernés.

Dans un exemple, le procédé (ou le module) ci-avant est mis en œuvre dans un environnement de conteneur.

Cela facilite l'intégration et la gestion des fonctions intermédiaires dans des architectures de micro-services, aider à offrir ainsi une scalabilité et une portabilité améliorées.

Dans un exemple, lequel le service intermédiaire est déployé dynamiquement lors de ladite mise en place conditionnelle.

Une telle démarche peut aider à améliorer la réactivité du système de services en permettant le déploiement instantané (ou quasi instantané) de nouvelles fonctions intermédiaires. Par exemple, lors d'une mise à jour de sécurité urgente, un nouveau service de filtrage peut être déployé à chaud pour protéger immédiatement le réseau contre une nouvelle vulnérabilité.

Dans un exemple, le procédé ci-avant comprend (ou le module ci-avant est configuré pour) lors de la mise en place de la communication indirecte, un abandon de la communication directe.

Cela peut aider à augmenter une sécurité du système (pour aller vers une sécurité maximale) en assurant que tout le trafic passe par la fonction intermédiaire sans exception. Par exemple, pour des transactions financières, la communication directe peut être abandonnée en faveur d'une communication passant par un service de vérification d'authenticité pour prévenir les fraudes.

Dans un exemple, le procédé ci-avant comprend (ou le module ci-avant est configuré pour), après la mise en place de la communication indirecte, un abandon conditionnel de la communication indirecte.

Prévoir de rétablir la communication directe lorsque les conditions de sécurité ou de performance le permettent est une option envisageable pour aider à optimiser les ressources du système de services.

Dans un exemple, le procédé ci-avant comprend (ou le module ci-avant est configuré pour) une application d'une surcouche d'authentification et/ou de filtrage à la communication indirecte.

De tels mécanismes contribuent à renforcer la sécurité des communications. Par exemple, il peut être prévu dans un réseau d'entreprise que toutes les communications passant par un service intermédiaire donné soient authentifiées et filtrées pour prévenir les accès non autorisés et les exfiltrations de données.

### Brève description des dessins

D'autres caractéristiques, détails et avantages apparaîtront à la lecture de la description détaillée ci-après, et à l'analyse des dessins annexés, sur lesquels :
**Fig. 1**

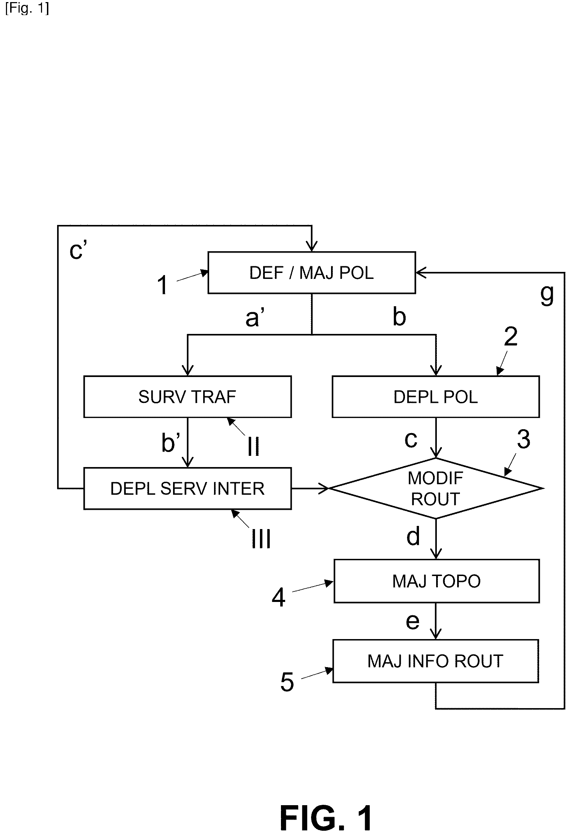

   [Fig. 1] montre un algorithme et une organisation fonctionnelle d'un système de services dans un exemple de réalisation.
**Fig. 2**

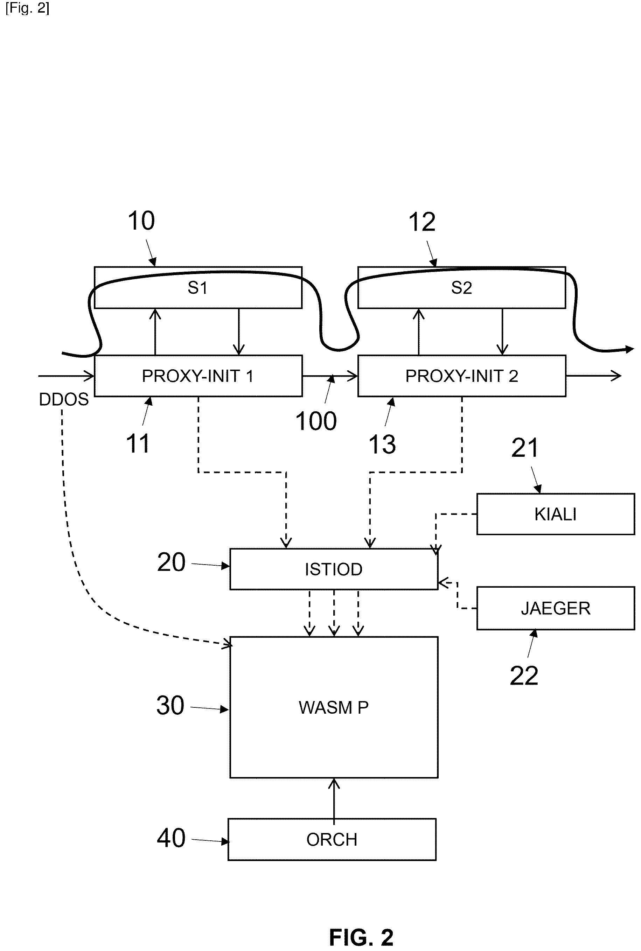

   [Fig. 2] montre une architecture d'un plan de contrôle d'un système de services dans un exemple de réalisation.
**Fig. 3** **et** **Fig. 4**

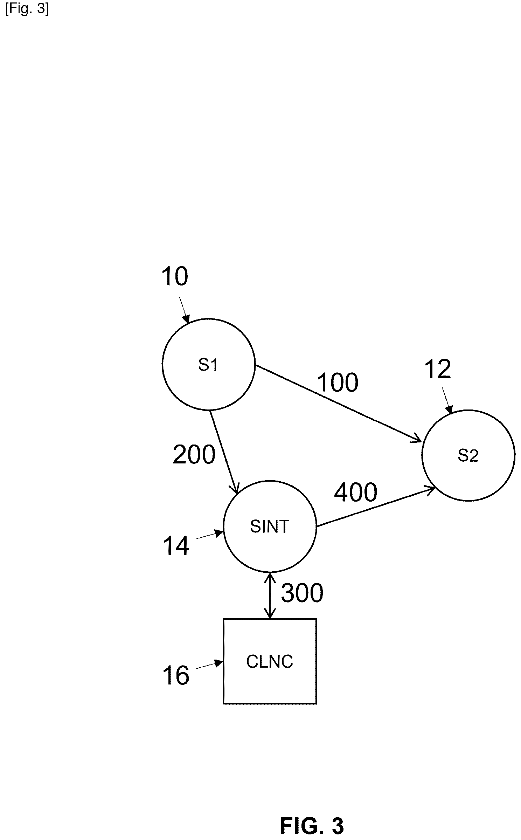

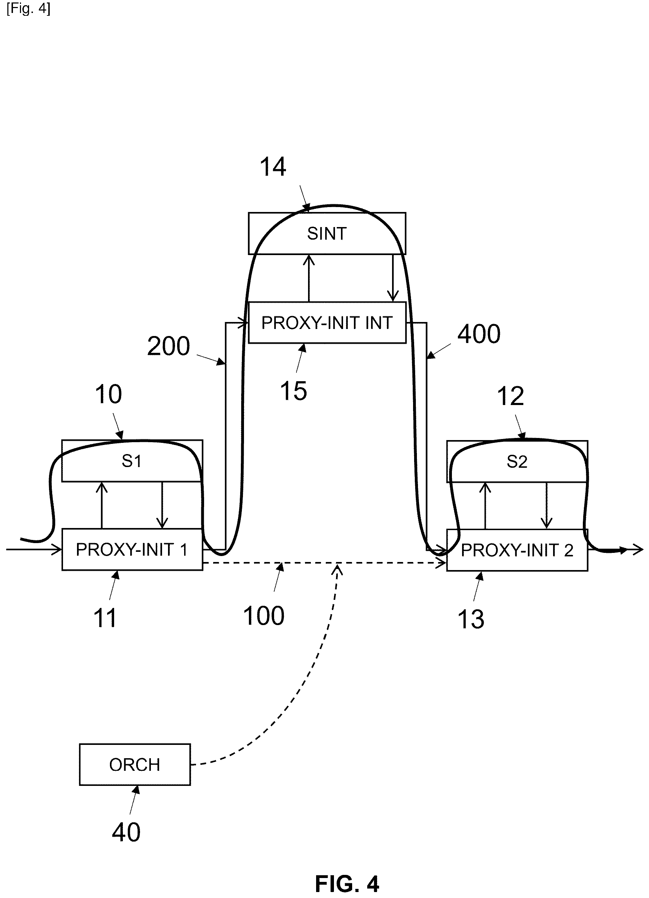

   [Fig. 3] et [Fig. 4] montrent deux exemples de mise en place d'une communication indirecte entre deux services dans des exemples de réalisation.

### Description des modes de réalisation

Dans la description qui va suivre, des chiffres de référence identiques désignent des éléments identiques ou ayant des fonctions similaires.

La présente divulgation concerne une technique permettant d'assister un système de services déployé dans un réseau de communication.

Il est à noter en préambule que le terme « service » est utilisé dans le présent document de manière générale pour englober un service à proprement parler, un ou plusieurs microservices ou même une application complète. On entend par « application » un ensemble de fonctionnalités ou macro-fonctions logicielles qui répondent à un besoin spécifique. Une application peut être composée d'un ou plusieurs services ou microservices qui travaillent ensemble pour fournir la fonctionnalité globale. Il convient de noter que la distinction entre un « service » et un « microservice » repose principalement sur l'échelle et le découpage fonctionnel de l'architecture logicielle d'une application. Un service est une unité fonctionnelle autonome qui peut couvrir un ensemble large de fonctionnalités et qui peut aussi bien former une partie d'une application plus large ou être utilisée par plusieurs applications. Un microservice est plus petit et est généralement responsable d'une fonctionnalité spécifique d'une application.

Un aspect de la technique proposée dans le présent document est un procédé de modification dynamique de routage dans un système de services d'un réseau de communication.

Un autre aspect de la technique proposée est un module de modification dynamique de routage dans un système de services d'un réseau de communication.

Tous moyens matériels et/ou logiciels adaptés peuvent être utilisés pour la mise en œuvre pratique dudit module et/ou desdits services. A titre d'exemple, un Packet Gateway (PGW) est un exemple d'équipement d'un réseau fournissant un service d'acheminement des données incluant des fonctions de sécurité. De manière générale, bien que des aspects de la technique proposée puissent être décrits dans le présent document comme étant un processus, un dispositif, un module, un système, une procédure ou une méthode, il est à noter que la technique proposée peut également couvrir une mémoire informatique susceptible d'être raccordée à un processeur éventuellement raccordé à une interface de communication, la mémoire stockant des instructions qui, lorsqu'elles sont exécutées par un tel processeur, permettent de réaliser les processus, dispositifs, modules, systèmes, procédures ou méthodes décrits dans ce document.

Quelques termes spécifiques aux systèmes de services et aux réseaux de communication sont à présent clarifiés pour une meilleure compréhension de la technique proposée.

L'expression « système de services » se réfère, dans le contexte du présent document, à un support physique et/ou logiciel qui permet la communication et le partage de ressources et de services dans un réseau de communication. Ce système peut désigner une infrastructure de communication ou une ou plusieurs de ses sous-parties, notamment des systèmes de traitement et de stockage de données, des serveurs et des réseaux, des centres de données, des systèmes cloud, des équipements de télécommunication, etc. Ce système peut aussi bien concerner une infrastructure de communication au sein d'une organisation spécifique, comme un réseau interne d'ordinateurs et de serveurs, ou une infrastructure plus large, comme un réseau de télécommunications ou un cloud. La technique proposée est applicable à tout type de système de services et à tout type d'architecture réseau.

Un système de services comporte un ensemble de ressources susceptibles d'être réservées aux fins d'un fonctionnement d'un ou plusieurs services. Cet ensemble de ressources peut inclure des ressources de types variés, notamment des temps de calcul au niveau d'un ou plusieurs processeurs, des emplacements d'une ou plusieurs mémoires, ou encore des créneaux d'utilisation, exprimés par exemple en temps et/ou en fréquence, d'un ou plusieurs canaux de communication.

Un système de services peut être étendu sur plusieurs sites et bénéficier de l'efficacité d'une architecture multi-sites. De telles architectures sont bien établies et permettent de renforcer la robustesse et la gestion des ressources au sein de l'ensemble du système de services. Des architectures distribuées à 'l'edge' représentent une évolution supplémentaire particulièrement pertinente pour des systèmes de télécommunications tels que les Cloud-RAN où elles sont en cours de déploiement.

Les environnements informatiques en nuage s'appuient sur un ou plusieurs systèmes de services tels que définis ci-avant.

Dans les environnements informatiques en nuage, l'unité d'hébergement de base est souvent appelée un « conteneur ». Ces conteneurs sont des unités logicielles légères qui encapsulent un code et toutes ses dépendances, permettant ainsi à un service de s'exécuter de manière fiable d'un environnement informatique à un autre.

Pour la gestion de ces conteneurs, une solution appelée Kubernetes, K8S, est fréquemment employée. Kubernetes est un système qui facilite le déploiement, la mise à l'échelle et la gestion des services conteneurisés.

Dans l'architecture de Kubernetes, les conteneurs sont regroupés en « pods », qui constituent l'unité de base représentant un déploiement d'un service. Plusieurs pods peuvent être regroupés en un « Node » ou « nœud », qui symbolise un serveur. La définition du « Node » ou « nœud » dans l'architecture de Kubernetes correspond à celle du « nœud » dans le système NUMA. Ces nœuds sont ensuite regroupés en « clusters », soit des ensembles de serveurs qui travaillent ensemble et peuvent être perçus comme un système unique.

Dans le contexte de Kubernetes, un cluster est constitué d'un groupe de « Masters » et de Nodes. Les Masters sont les composants du cluster Kubernetes qui fournissent l'interface de contrôle ou plan de contrôle pour le cluster, et qui gèrent l'ordonnancement des pods, la détection et la gestion des échecs, ainsi que le déploiement de nouvelles versions des applications. Les Nodes, quant à eux, sont les serveurs qui exécutent les applications et qui fournissent l'environnement d'exécution pour les conteneurs.

Pour gérer les communications réseau entre les conteneurs d'une application déployée sur un cluster Kubernetes, des conteneurs auxiliaires, dits « proxy sidecar » sont attachés à chaque conteneur principal de l'application. Les proxys sidecar sont responsables de l'interception et de la gestion des communications réseau. Chaque proxy sidecar agit en tant qu'intermédiaire entre le conteneur principal auquel il est attaché et le reste du réseau. Pour renforcer la sécurité, les proxys sidecar peuvent inclure des fonctions telles que la validation des requêtes et des réponses, la gestion des autorisations et des identités, ainsi que la surveillance.

ISTIO est un exemple de maillage de services open source, couramment utilisé par des opérateurs de mise en réseau et de sécurité pour l'exécution d'applications distribuées basées sur des microservices, et qui fournit une manière uniforme de connecter, gérer et sécuriser ces microservices à l'aide de proxys sidecar.

ISTIOD est un pilote central d'ISTIO, qui sert de point de contrôle pour configurer les proxys sidecar. Il est adapté pour gérer des règles de routage, une politique de gestion de communications et d'opérations entre les services, et des configurations de services. ISTIOD intervient dans la détection d'événements en appliquant une politique de gestion et en observant les communications entre microservices.

KIALI est un outil de visualisation pour ISTIO, qui permet d'identifier visuellement des anomalies ou des modèles de comportement inhabituels dans les communications entre microservices. KIALI facilite ainsi la détection d'événements liés à des problèmes de sécurité potentiels.

JAEGER est un système de traçabilité distribuée, qui permet de recueillir des informations sur les communications entre microservices pour permettre une analyse détaillée de la latence, des performances et des erreurs. JAEGER facilite ainsi la détection d'événements liés à des problèmes de performance ou des défaillances.

La technique proposée est particulièrement adaptée aux architectures de micro-services, telles que les conteneurs et les fonctions réseau virtuelles. Ces dernières sont couramment utilisées dans les systèmes de télécommunications et dans les environnements informatiques basés sur le cloud.

Il est présent fait référence à la figure 1, qui représente un exemple possible d'algorithme et d'organisation fonctionnelle permettant la mise en œuvre de la technique proposée au niveau d'un système de services dans un réseau de communication.

Il est prévu, selon une première branche possible de l'algorithme :
un module 1 de définition et de mise à jour d'une politique de gestion,
un module 2 de déploiement de la politique de gestion,
un module 3 de modification de routage pour un trafic concerné par la politique de gestion et/ou par la surveillance,
un module 4 de mise à jour d'informations de topologie, et
un module 5 de mise à jour d'informations de routage.

Le module 1 de définition et de mise à jour de la politique de gestion est configuré pour établir et/ou réviser une politique de gestion du trafic au sein du réseau. Cette politique peut avoir trait à une optimisation d'un ou plusieurs besoins, par exemple de sécurité, de performance ou de disponibilité. Le module 1 peut définir des règles qui déterminent comment les autres modules doivent gérer et diriger le trafic. Le module 1 peut en outre prévoir qu'une règle donnée fasse l'objet d'une application différenciée par entité (par exemple un service, un client, une macro-fonction) ou groupe d'entités, par exemple en fonction de niveaux de criticité respectifs de l'entité concernée ou du groupe d'entités concerné.

Le module 2 de déploiement de la politique de gestion est configuré pour déployer la politique établie ou mise à jour par le module 1 dans le réseau pour qu'elle soit appliquée en temps réel.

Le module 3 de modification de routage est configuré pour appliquer la politique de gestion en modifiant, le cas échéant, une ou plusieurs routes que le trafic doit suivre à travers le réseau. Cela peut inclure l'activation de fonctions de sécurité sur la base de divers déclencheurs tels que des changements de volume de trafic, des priorités spécifiques définies par un utilisateur, ou des critères de qualité de service (prédéfinis par exemple). Par exemple, une augmentation soudaine du volume de trafic ou une demande pour une priorité de service élevée peut activer conditionnellement des pares-feux ou des systèmes de détection d'intrusion pour renforcer préventivement la sécurité au sein du réseau. L'activation conditionnelle de ces fonctions de sécurité ne nécessite donc aucune détection préalable d'événement spécifique. Par "événement spécifique", on entend des incidents tels qu'une tentative d'intrusion détectée, une alerte de sécurité générée par un système de surveillance, ou une défaillance matérielle signalée. Ainsi, les déclencheurs peuvent inclure des scénarios comme :
une augmentation de la demande de bande passante en raison d'un événement prévu (par exemple,
une diffusion en direct),
une reconfiguration du réseau pour optimiser les performances pendant les heures de pointe,
l'application de politiques de sécurité renforcées pour des segments de réseau critiques, ou encore l'ajustement du routage pour maintenir la qualité de service lors de la mise à jour ou de la maintenance de certaines parties du réseau..

Le module 4 de mise à jour d'informations de topologie est configuré pour maintenir et actualiser la cartographie du réseau. Cette actualisation contribue à l'optimisation du routage et la distribution efficiente des ressources du système de services. Le module 4 peut être configuré pour mettre à jour les informations de topologie selon une programmation différenciée par service, flux ou client en fonction de la criticité du service, flux ou client concerné. En complément d'une modification conditionnelle de routage mise en œuvre par le module 3, il peut être prévu que le module 4 soit configuré pour mettre en œuvre une mise à jour conditionnelle de points d'entrée dans le réseau pour renforcer des accès correspondants au réseau.

Le module 5 de mise à jour d'informations de routage est configuré pour assurer que les informations sur les routes et/ou itinéraires du trafic au sein du réseau sont continuellement à jour, aidant ainsi à augmenter une réactivité à tout ajustement de la politique de gestion, une mise à jour de la nouvelle architecture du réseau incluant par exemple des suppressions de services et/ou de nouveaux déploiements, ou encore une mise en œuvre d'opérations de nettoyage à des fins d'optimisation des ressources du système de services. Par exemple, la réactivité peut être immédiate ou quasi-immédiate.

Les modules 1 à 5 interagissent dans un cycle matérialisé sur la figure 1 par les flèches b, c, d, e et g.

La flèche b représente le transfert de la politique de gestion du trafic définie ou mise à jour par le module 1 au module 2. Cette flèche symbolise la transmission de directives et règles complètes qui doivent être déployées dans le réseau. Cela inclut toutes les modifications apportées à la gestion du trafic, de la sécurité, et de la performance, ainsi que les spécifications sur la manière dont la politique doit être appliquée selon différents niveaux de criticité des entités concernées.

La flèche c transmet les instructions de déploiement de la politique de gestion du module 2 au module 3. Cela comprend des directives spécifiques sur les modifications de routage nécessaires pour appliquer la politique de gestion dans le réseau, incluant l'activation conditionnelle de fonctions de sécurité ou d'autres mesures sans la présence d'un déclencheur spécifique.

La flèche d porte l'information relative aux changements de routage effectués par le module 3 à l'intention du module 4. Elle permet de communiquer les ajustements ou les nouvelles configurations de route qui nécessitent une mise à jour dans la cartographie du réseau pour que le module 4 puisse actualiser et optimiser la topologie du réseau en conséquence.

La flèche e conduit les informations de la topologie mise à jour du module 4 vers le module 5. Elle sert à informer le module de mise à jour des informations de routage des dernières modifications de la topologie réseau, permettant ainsi de répercuter ces changements dans les itinéraires actuels du trafic pour maintenir l'efficacité du réseau.

La flèche g représente le retour d'information du module 5 vers le module 1. Ce feedback inclut les données sur l'efficacité actuelle du routage et tout autre indicateur pertinent qui pourrait influencer la future politique de gestion du trafic. Ce retour permet au module 1 de réévaluer et d'affiner la politique existante pour mieux répondre aux besoins changeants du réseau.

La première branche de l'algorithme de la figure 1 permet d'ajouter dynamiquement une fonctionnalité à un flux préexistant ; elle peut être appliquée dans divers contextes d'utilisation.

Par exemple, dans un but d'une gestion dynamique d'une capacité réseau, elle permet d'utiliser une politique de gestion du trafic pour ajuster automatiquement le routage et la capacité du réseau. Cela se fait par la mise en place de fonctions intermédiaires en fonction de la demande fluctuante, assurant ainsi une performance optimale sans intervention humaine.

Par exemple, dans un but de réponse proactive à une vulnérabilité, elle permet d'activer de manière conditionnelle des fonctions de sécurité, comme des firewalls ou des systèmes de détection d'intrusion, basée sur une politique de sécurité continuellement révisée pour contrer des menaces émergentes avant qu'une attaque ne se produise.

Par exemple, dans un but d'amélioration (par exemple d'optimisation) de l'expérience utilisateur pour des applications critiques, elle permet un ajustement du routage par la mise en place de fonctions intermédiaires pour aider à améliorer la qualité de service pour des applications sensibles à la latence, telles que les services de VoIP ou de streaming vidéo, en réduisant les délais et en limitant (par exemple évitant) les congestions réseau.

Il est prévu, dans une deuxième branche possible de l'algorithme et outre les modules 1, 3, 4 et 5 précédemment décrits :
un module Il de surveillance de trafic, et
un module III de déploiement d'un service intermédiaire.

Il peut également être prévu, préalablement à la mise en œuvre du module III, un module supplémentaire de mise en place prévisionnelle d'une infrastructure supportant ledit service intermédiaire, ceci afin de renforcer la réactivité de l'algorithme.

Le module II de surveillance du trafic est configuré pour surveiller continuellement le trafic réseau, c'est-à-dire de manière régulière et ininterrompue, avec des fréquences et des méthodes d'inspection pouvant être variables en fonction de besoins spécifiques du réseau et/ou d'objectifs spécifiques de gestion du système de services. Il peut par exemple être prévu que certains types de trafic ou segments du réseau (plus critiques par exemple) soient surveillés de manière plus intensive. Cette surveillance peut inclure par exemple une ou plusieurs des méthodes de surveillance suivantes :
une inspection exhaustive de chaque paquet de données issu du premier service, ou de chaque paquet circulant entre les premier et second service,
une inspection aléatoire de paquets de données issus du premier service, ou de paquets circulant entre les premier et second service,
une inspection périodique des paquets de données issus du premier service, ou de paquets circulant entre les premier et second service, à intervalles réguliers,
une collecte de métriques de performance du réseau telles que le volume de trafic, le taux d'erreur ou la latence, couplée à une analyse de ces métriques sur une période suffisamment longue pour repérer des tendances inhabituelles ou des sauts soudains ou chutes dans le volume de trafic qui pourraient indiquer des problèmes de sécurité ou de performance,
une utilisation d'algorithmes de détection d'anomalies qui évaluent les données collectées en continu par les proxies pour identifier des comportements suspects en tant qu'écarts par rapport à des comportements (« normaux ») prévus par la politique de gestion, un comportement suspect pouvant par exemple désigner une séquence de requêtes qui ne correspond pas à un profil normal d'utilisation ou un taux élevé d'erreurs ou de réponses anormales détectées par les proxies,
une surveillance basée sur des événements spécifiques, ou déclencheurs prédéfinis, tels que des alertes de sécurité, des changements de configuration réseau, ou des signatures de cyberattaques par application de la politique de gestion.
Ces méthodes de surveillance sont complémentaires et peuvent être éventuellement être utilisées conjointement.

Un exemple d'algorithme de détection d'attaque pouvant être mis en œuvre par un module WASM peut inclure une détection d'un utilisateur associé à un trafic donné, puis une mise en œuvre d'une ou plusieurs règles de filtrage selon une authentification de l'utilisateur, puis une analyse des trames du trafic donné. Un tel algorithme permet d'analyser le trafic donné selon plusieurs critères reflétant une signature spécifique d'attaque, par exemple une origine du trafic, une destination du trafic, un port de destination du trafic, une variation de débit du trafic, etc.

Il peut par exemple utiliser des capteurs et des algorithmes avancés pour collecter des métriques ou indicateurs permettant d'évaluer en temps réel des modèles de trafic en matière par exemple de sécurité, de performance des services déployés, de taux d'utilisation de ressources et/ou de consommation d'énergie, détecter des écarts par rapport à une norme qui pourraient indiquer des risques de sécurité et/ou des défaillances, et/ou générer des alertes en fonction des écarts détectés.

Le module III de déploiement de service intermédiaire est configuré pour réagir aux alertes générées par le module II en déployant (rapidement par exemple) un ou plusieurs services intermédiaires pour inspecter, filtrer,et/ ou modifier le trafic afin de gérer les menaces détectées. Ce module permet d'agir spécifiquement sur des flux de données jugés risqués sans perturber l'ensemble du réseau. Il peut par exemple être prévu que le module III déploie le service intermédiaire sur des ressources cloud spécifiquement identifiées et/ou sélectionnées, par exemple, un ou plusieurs pods, nœuds ou clusters.

Les modules 1, II, III, 3, 4 et 5 interagissent dans un cycle matérialisé sur la figure 1 par les flèches a', b', d, e et g, qui représente une mise en œuvre d'une contre-mesure à une détection d'attaque s'appuyant sur un plan de contrôle du système de services.

La flèche a' représente le transfert de la politique de gestion du trafic définie ou mise à jour par le module 1 au module II. Cette flèche symbolise, comme la flèche b décrite précédemment la transmission de directives et règles complètes qui doivent être déployées dans le réseau. Cela inclut des directives relatives à la surveillance du trafic par le module II et peut notamment inclure des valeurs (utilisées par exemple comme seuils) ou normes en tant que références avec lesquelles comparer les métriques ou indicateurs collectés relatifs au trafic courant.

La flèche b' représente la transmission d'alertes de sécurité et de notifications de comportement anormal ou non souhaitable détectés par le module II au module III. Ces alertes déclenchent le déploiement de services intermédiaires pour adresser ou mitiger des risques identifiés ainsi que des modifications de routage par le module 3 pour diriger tout ou partie des trafics concernés par ces risques identifiés vers ces services intermédiaires.

Les flèches d, e et g remplissent les mêmes fonctions que celles précédemment décrites relativement à la première branche, c'est-à-dire le transfert des informations de mise à jour de routage, de topologie et de feedback pour permettre une gestion continue et/ou une réévaluation de la politique de gestion.

La deuxième branche de l'algorithme de la figure 1 permet une interception et un traitement dit « fort » d'un flux préexistant ; elle peut être appliquée dans divers contextes d'utilisation.

Par exemple, dans un but d'une détection et intervention rapide en cas de cyberattaque, elle permet de détecter une tentative d'intrusion ou un trafic malveillant en temps réel et de déployer automatiquement des fonctions de sécurité (par exemple par un chiffrement des données impliquées et/ou une protection et/ ou une isolation de l'application concernée) pour inspecter et neutraliser l'attaque avant qu'elle n'atteigne des actifs critiques.

Par exemple, dans un but de gestion d'anomalies de trafic dans des réseaux impliquant des objets connectés, elle permet de surveiller spécifiquement les objets connectés pour détecter des comportements anormaux qui pourraient indiquer un objet connecté compromis, et, le cas échéant, d'intervenir immédiatement (ou quasi immédiatement) pour sécuriser les données et les objets connectés concernés.

Par exemple, dans un but de contrôle dynamique des applications dans un environnement de cloud hybride, elle permet, en cas de détection d'une charge de travail anormalement élevée ou suspecte dans le cloud, d'automatiquement isoler l'application concernée et rediriger le trafic vers des ressources plus sécurisées pour un examen plus approfondi, garantissant ainsi la continuité et la sécurité des opérations.

Il est présent fait référence à la figure 2, qui représente un exemple possible d'architecture d'un plan de contrôle permettant la mise en œuvre de la technique proposée dans un réseau de communication au niveau d'un système de services. De manière générale, un plan de contrôle adapté comprend au moins un gestionnaire, un orchestrateur et un maillage de services (en l'espèce ISTIO dans l'exemple illustré).

Dans le système de services, un trafic réseau quelconque est aiguillé successivement vers une pluralité de services selon le principe d'un chaînage de services.

Sur la figure 2, un exemple de trafic réseau est symbolisé comme étant d'abord aiguillé vers un premier service 10 puis vers un second service 12.

Des proxies sidecars 11, 13 sont respectivement configurés pour chaque service 10, 12. Ces proxies routent le trafic à travers le système de services. Ainsi, dans l'exemple considéré, le trafic entrant est d'abord aiguillé vers le proxy 11 du premier service 10, puis routé, par ce proxy 11, sous la forme d'une communication 100, vers le proxy 13 du second service 12.

Les proxys sont gérés de manière centralisée par un module ISTIOD 20, lui-même pouvant utiliser, à titre au moins d'assistance à la prise de décision, un module KIALI 21 et/ou un module JAEGER 22. Le module KIALI 21 permet de visualiser l'impact et l'étendue d'un événement détecté (par exemple une attaque) sur l'ensemble du système de services, facilitant ainsi la prise de décisions rapides sur des modification de routage et/ou de topologie à entreprendre. Le module JAEGER 22 permet de suivre le chemin de requêtes au travers des différents microservices, ce qui a pour effet de permettre d'analyser facilement l'impact de récentes modifications de routage et/ou de topologie sur le fonctionnement du système de services et d'identifier d'éventuels points de défaillance ou goulets d'étranglement, facilitant ainsi la prise de décision relative à des actions correctives.

Le module ISTIOD 20 est interfacé à un orchestrateur 40 du système de services et/ou à un gestionnaire du système de services (non représenté) via un module ou plugin dédié 30 dont la mise en place et/ou la mise à jour sont par exemple effectuées par le module 2 de déploiement de la politique de gestion. A titre d'exemple, le module 30 peut être un module WebAssembly (WASM). WebAssembly est un format binaire et un langage de bas niveau conçu pour être exécuté dans les navigateurs web. Il permet d'exécuter des applications web complexes et performantes, en offrant une alternative aux langages de programmation traditionnels tels que JavaScript. WebAssembly est également utilisé en dehors des navigateurs web, notamment dans le domaine des terminaux. Il permet d'exécuter des applications et des logiciels de manière portable et sécurisée sur différents types de terminaux, tels que les smartphones, les tablettes, les ordinateurs de bureau, les serveurs, etc. WebAssembly peut permettre des performances élevées et une compatibilité multiplateforme, ce qui en fait un choix attrayant pour le développement d'applications pour les terminaux.

Les données de trafic passant par les proxies 11, 13 peuvent ainsi être analysées par le module 30 pour détecter des signatures d'attaques, telles que des anomalies de trafic, des motifs d'accès suspects, ou des signatures de malware. Le module 30 peut être configuré pour réagir à des critères spécifiques applicables à un trafic donné, ou à l'ensemble du trafic associé à un client donné, un service donné, un niveau de criticité donné, etc... ou à l'ensemble du trafic au sein du système de services. Des exemples de critères spécifiques incluent des seuils de débit, des types de requêtes, ou des comportements d'utilisateur.

Lorsqu'un événement (comme une attaque potentielle) est détecté par le module 30, il peut être prévu d'instruire l'orchestrateur 40 et/ou le gestionnaire du système de services afin de modifier dynamiquement le routage pour isoler ou rediriger le trafic vers des services spécialisés, comme un service de "clinique" pour nettoyer et/ou inspecter plus avant le trafic. Cela peut inclure la redirection à travers des chemins sécurisés ou des services qui fournissent des fonctions de nettoyage et/ou d'authentification supplémentaires. Par exemple, l'établissement d'un chemin sécurisé vers un service intermédiaire peut impliquer un échange de certificats TLS.

Le service intermédiaire peut être mis en œuvre par un fournisseur de service. Il peut en outre être prévu de notifier une alerte indicative de l'événement détecté au fournisseur de service et plus généralement à toute entité concernée : par exemple un certifieur ou toute autre entité pertinente du plan de contrôle, des clients d'une ou plusieurs applications concernées par l'événement détecté, etc. Après analyse de l'alerte et/ou du trafic redirigé vers le service intermédiaire, le fournisseur de service peut sélectionner, dans une bibliothèque de fonctions pouvant être remplies par le service intermédiaire, une ou plusieurs fonctions appropriées. La fonction intermédiaire peut être fournie par exemple sous forme d'un code WASM ad hoc, qui peut éventuellement être généré à la volée par le fournisseur de service, ou sous forme d'une ressource cloud, telle qu'un pod, hébergeant un tel code.

La figure 3 illustre un exemple de mise en place d'une communication indirecte entre le premier service 10 et le second service 12 passant par un service intermédiaire 14 agissant en tant que service de réparation partiel du trafic initialement aiguillé du premier service vers le second service.

Dans l'exemple de la figure 3, la communication directe 100, initiale, entre les proxies respectifs 11, 13 du premier et du deuxième service reste active pour une partie du trafic initialement aiguillé du premier service vers le second service via ladite communication directe (par exemple un trafic considéré comme non indicatif d'une attaque), tandis que la partie restante du trafic (par exemple un trafic considéré comme indicatif d'une potentielle attaque) est détournée vers le service intermédiaire 14.

La communication indirecte comprend :
une première communication 200 entre le proxy 11 du premier service et le proxy du service intermédiaire 14
suivie d'une communication interne 300 au sein du service intermédiaire 14 vers un module dit « clinique » assurant une fonction d'inspection et/ou de réparation du trafic reçu par le service intermédiaire 14 et
d'une deuxième communication 400 entre le proxy du service intermédiaire et le proxy 13 du second service.

La mise en place de la communication indirecte peut se faire en deux temps. Dans un premier temps, la première communication 200 et la deuxième communication 400 peuvent être préparées, c'est-à-dire que les routes correspondantes peuvent être définies au niveau du plan de contrôle du système de services sans être immédiatement utilisées pour transporter un quelconque flux. Ensuite, dans un deuxième temps, les routes préparées peuvent être activées, c'est-à-dire utilisées pour aiguiller le trafic du proxy 11 du premier service vers le proxy du service intermédiaire 14 puis du proxy du service intermédiaire 14 vers le proxy 13 du second service. L'activation des routes peut s'effectuer selon un réglage de poids. Par exemple, avant l'activation, un poids de 1 peut être affecté à la route correspondant à la communication directe 100 tandis qu'un poids de 0 peut être affecté à la route correspondant à la première communication 200, ainsi tout le trafic traité par le premier service est directement routé vers le deuxième service. L'activation de la communication indirecte peut comprendre une affectation d'un poids « x », tel que 1 ≥ x > 0, à la route correspondant à la première communication 200 et une affectation concomitante d'un poids « 1-x » à la route correspondant à la communication directe 100. Ainsi, selon la valeur choisie de « x », tout ou partie du trafic traité par le premier service est directement routé vers le service intermédiaire.

La figure 4 illustre un autre exemple de mise en place d'une communication indirecte entre le premier service 10 et le second service 12 passant par un service intermédiaire 14.

Dans l'exemple de la figure 4, la communication directe 100 est désactivée et est remplacée par :
la première communication 200 entre le proxy 11 du premier service et le proxy 15 du service intermédiaire 14
la deuxième communication 300 entre le proxy 15 du service intermédiaire et le proxy 13 du second service.

Il ressort des exemples de réalisation décrits ci-avant que la communication directe selon l'invention peut reposer sur un lien établi ou préconfiguré. Ce lien peut être actif, inactif ou dormant au moment de l'examen d'au moins une condition conduisant à la mise en place de la communication indirecte.

### Application industrielle

Les présentes solutions techniques peuvent trouver à s'appliquer auprès d'opérateurs et entreprises désireux de renforcer la sécurité de leurs applications et services fonctionnant dans des environnements basés sur les conteneurs et les micro-services.

Elles peuvent notamment être adaptées, au moins dans certains modes de réalisation, pour la gestion de systèmes de services au sein d'environnements informatiques en nuage, que ce soit privés ou hybrides, combinant des éléments privés et publics.

Elles peuvent, au moins dans certains modes de réalisation, participer à la protection des bases de données, dont les points d'accès constituent souvent des vulnérabilités (et parfois même jouer un rôle clé dans cette protection). Bien que ces bases soient situées dans des emplacements fortement sécurisés, leur accès se fait fréquemment via des infrastructures partagées entre des domaines privés et publics, ce qui peut présenter des risques.

Ces solutions peuvent notamment être adaptées, au moins dans certains modes de réalisation, à diverses configurations de clusters, qu'ils soient localisés sur un seul site ou répartis sur plusieurs sites et gérés par différents acteurs, comme dans le cas des configurations de Cloud-RAN.

Des exemples d'application peuvent concerner une grande variété de systèmes et d'infrastructures, par exemple des clusters exploités par de multiples acteurs, répartis sur différentes zones géographiques, et étendus sur plusieurs centres de données, ou un cluster principal avec des répliques distribuées sur plusieurs centres de données, ou encore des clusters multi-acteurs et multi-zones connectant des satellites à des centres de données terrestres.

La présente divulgation ne se limite pas aux exemples décrits ci-avant, seulement à titre d'exemple, mais elle englobe toutes les variantes que pourra envisager l'homme de l'art dans le cadre de la protection recherchée.

## Revendications

1. Procédé de modification de routage dans un système de services d'un réseau de communication, le procédé comprenant, lors d'une communication directe entre un premier service et un deuxième service :
une mise en place conditionnelle d'une communication indirecte entre lesdits services passant par un service intermédiaire.

2. Procédé selon la revendication 1, dans lequel ladite mise en place conditionnelle tient compte d'une politique de gestion du système de services.

3. Procédé selon l'une quelconque des revendications précédentes, dans lequel ladite mise en place conditionnelle tient compte d'une surveillance d'un trafic au sein du réseau de communication.

4. Procédé selon l'une quelconque des revendications précédentes, dans lequel le service intermédiaire agit en tant que service de réparation au moins partiel d'un trafic issu du premier service.

5. Procédé selon l'une quelconque des revendications précédentes, dans lequel le service intermédiaire est sélectionné parmi une pluralité de services lors de ladite mise en place conditionnelle.

6. Procédé selon la revendication précédente, dans lequel le service intermédiaire est sélectionné en fonction d'au moins un critère de sélection parmi :
un niveau de sécurité requis,
un niveau de performance requis,
un type de trafic utilisant la communication indirecte,
une exigence réglementaire,
une combinaison d'au moins deux des critères ci-dessus.

7. Procédé selon l'une quelconque des revendications précédentes, mis en œuvre par un module WASM (WebAssembly).

8. Procédé selon l'une quelconque des revendications précédentes, mis en œuvre dans un environnement de conteneur.

9. Procédé selon l'une quelconque des revendications précédentes, dans lequel le service intermédiaire est déployé dynamiquement lors de ladite mise en place conditionnelle.

10. Procédé selon l'une quelconque des revendications précédentes, comprenant, lors de la mise en place de la communication indirecte, un abandon de la communication directe.

11. Procédé selon l'une quelconque des revendications précédentes, comprenant, après la mise en place de la communication indirecte, un abandon conditionnel de la communication indirecte.

12. Procédé selon l'une des revendications précédentes, comprenant une application d'une surcouche d'authentification et/ou de filtrage à la communication indirecte.

13. Module de modification de routage dans un système de services d'un réseau de communication, le module étant configuré pour, lors d'une communication directe entre un premier service et un deuxième service :
une mise en place conditionnelle d'une communication indirecte entre lesdits services passant par un service intermédiaire.

14. Programme informatique comportant des instructions pour la mise en œuvre de tout ou partie du procédé selon l'une des revendications 1 à 12, lorsque ce programme est exécuté par un processeur.

15. Support d'enregistrement non transitoire, lisible par un ordinateur, sur lequel est enregistré le programme selon la revendication 14.
